# EUROPEAN PATENT APPLICATION

(11) **EP 4 245 868 A1**
(43) Date of publication of application: **20.09.2023**
(21) Application number: 22163012.2
(22) Date of filing: 18.03.2022
(51) Int. Cl.: C22B 1/00, C01D 15/00, C22B 7/00, C22B 26/12

(54) **PROCESS FOR GENERATING A METAL-CONTAINING AQUEOUS SOLUTION**

(71) Applicant: Northvolt Revolt AB, 112 47 Stockholm (SE)
(72) Inventor: Alemrajabi, Mahmood, 170 67 SOLNA (SE); Gracia Tabuenca, Alejandro, 723 58 Västerås (SE); Jensen, Robert, 723 58 Västerås (SE)
(74) Representative: AWA Sweden AB

(57) **Abstract**

The present disclosure relates to a process for generating a metal-containing aqueous solution, the process comprising carrying out acid leaching on a lithium-containing feedstock and carrying out acid leaching on a metal-based raw material feedstock. The lithium-containing feedstock may originate from lithium-ion batteries and may comprise any one or more of cathode active materials nickel, cobalt or manganese.

## Description

### TECHNICAL FIELD

The present disclosure relates to a process for generating a metal-containing aqueous solution, the process comprising carrying out acid leaching on a lithium-containing feedstock and carrying out acid leaching on a metal-based raw material feedstock. In particular, the lithium-containing feedstock originates from lithium-ion batteries and comprises any one or more of cathode active materials nickel, cobalt or manganese.

### BACKGROUND

Recovery of metals from feedstocks originating for example form waste batteries will become critically important to achieve economical and environmentally friendly production of batteries, because several of the metals contained in batteries such as lithium, cobalt, nickel, aluminum, copper or manganese, are valuable, in particularly considering the increasing demand for batteries, for example for electric vehicles, on the one side and the scarcity of resources on the other side. Batteries can be based on various technologies, for example the nickel-cadmium (NiCd) or the nickel metal hydride (NiMH) technology. In the transportation sector, secondary lithium-ion batteries (LIBs) have become the most popular power source. In LIBs, lithium composite oxides including lithium and transition metals nickel, cobalt and/or manganese (so-called "NCM metals") are typically used as active materials of the cathode, and therefore are the metals of main interest for recovery.

From the viewpoint of energy consumption and cost efficiency, hydrometallurgical processes are often preferred over pyrometallurgical processes in raw material recovery. Such hydrometallurgical processes employ multi-step treatments and chemical process for extracting the metals from the feedstock, and will furnish the metals as aqueous solutions of their salts, for example as sulfates, separately or already in the desired stoichiometries for the synthesis of precursor materials in battery production. However, the composition of metal salt solutions may be adjusted to the desired stoichiometries by addition of single or mixed metal components.

Considering the increasing demand for metals to be used for example in battery production, in particular lithium-ion batteries, and a growing sensibility towards environmental issues, there is considerable demand for improving hydrometallurgical processes to ensure efficient leaching of metals of interest from a feedstock with high leaching yields and at the same time reduced consumption of chemicals and reduced amount of waste production.

### SUMMARY

It is an object of the present disclosure to provide a process for efficient leaching of a lithium-containing feedstock, such as black mass, to generate a metal-containing aqueous solution, which process enables increasing the leaching yield and at the same time reducing the consumption of chemicals and the amount of waste generated.

Further, it is an object of the present disclosure to provide a process for leaching of a lithium-containing feedstock, which enables generating a metal-containing aqueous solution that can be used to produce battery-grade metal salts, such as metal sulfates, for battery precursor synthesis.

Further, it is an object of the present disclosure to provide a process for efficient leaching of a feedstock comprising a material derived from recycled lithium ion batteries or lithium ion battery manufacturing scrap (so called "black mass"), which process enables increasing the leaching yield of metals of interest, in particular cathode active metals Ni, Co and/or Mn, and at the same time reducing the consumption of chemicals and the amount of waste generated.

It is further an object of the present disclosure to provide a process for efficient leaching of a lithium-containing feedstock, which allows for integrating recycling of batteries in battery precursor synthesis.

One or more of the above-outlined objects may be solved by a process for generating a metal-containing aqueous solution according to independent claim 1. Independent claim 1 and the dependent claims can be combined in any technologically suitable and sensible way, providing further embodiments of the invention.

Specifically, disclosed herein is a process for generating a metal containing aqueous solution, wherein the process comprises: carrying out a first acid leaching on a lithium-containing feedstock to obtain a first leachate and using a first leaching solution; and carrying out a second acid leaching on a metal-based raw material feedstock to obtain a second leachate and using a second leaching solution, to form the metal-containing aqueous solution.

It has surprisingly been found that the process disclosed herein, which includes the first and second leaching operations on different feedstocks, advantageously allows for using the synergies of co-processing a lithium-containing feedstock, such as black mass, and a metal-based raw material feedstock, such as MHP, to increase the leaching yield of, in particular, desirable cathode active metals such as Ni, Co or Mn, while reducing the consumption of chemicals and the amount of waste generated, thereby making the whole leaching process more efficient. The process according to the present disclosure therefore advantageously allows for integrating recycling of spent or waste batteries in the battery precursor synthesis, thereby making battery production more efficient.

### BRIEF DESCRIPTION OF THE DRAWINGS

Different aspects are now described with reference to the accompanying drawings. Apparently, the accompanying drawings in the following description show merely some embodiments of this application, and a person of ordinary skill in the art may still derive other drawings from these accompanying drawings without creative efforts.

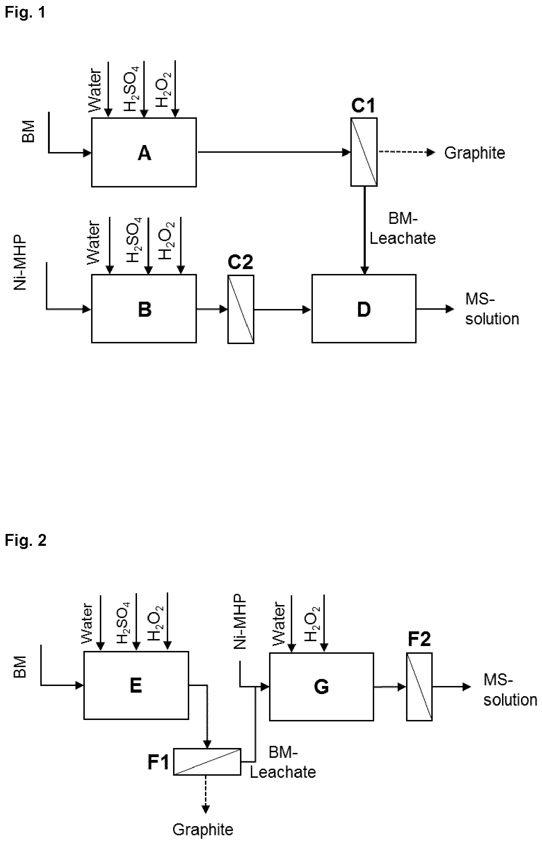

Fig. 1 is a schematic flowchart illustrating an embodiment of the process for generating a metal-containing aqueous solution according to the present disclosure, which applies a parallel setup and in which black mass (BM) is used as a lithium-containing feedstock and a mixed nickel hydroxide precipitate (Ni-MHP) is used as a metal-based raw material feedstock.

With reference to Fig. 1, black mass obtained for example from crushed lithium-ion batteries containing Li and Ni, Co and/or Mn as metals of interest and metal impurities such as Fe, Al, Cu, Zn, Mg, K and Ca, is leached (A), for example in a continuous process employing a Continuous Stirred-Tank Reactor (CSTR), by reductive acid leaching using a leaching solution of concentrated sulfuric acid (H₂SO₄), hydrogen peroxide (H₂O₂, 50% by weight) and water. By the BM leaching (A), all the metals of interest (i.e. Li and Ni, Co and/or Mn) and impurities contained in the BM are dissolved in the leachate (BM-leachate) in the form of their sulfate salts, leaving behind graphite as an undissolved fraction. The undissolved graphite is separated from the BM-leachate by filtration (C1) and is optionally washed with water to remove leftovers of leachate solution. Ni-MHP, which may contain Ni and Co and/or Mn as metals of interest and metal impurities such as Zn, Mg, and Ca, is leached (B) in a separate system, for example in a one-step process employing a Batch Stirred-Tank Reactor (BSTR), by reductive acid leaching using a leaching solution of concentrated H₂SO₄, H₂O₂ (50% by weight) and water. By the Ni-MHP leaching (B), the Ni-MHP fed may be completely dissolved so that no solid residue is obtained after the leaching (B). In this case, an additional separation step may not be carried out. However, in case the Ni-MHP fed is not completely dissolved, the solid residue obtained after the Ni-MHP leaching (B) is separated from the leachate by filtration (C2).

The BM-leachate and the leachate obtained from the Ni-MHP leaching are then mixed together (D), for example in a BSTR, to obtain a metal sulfate-containing aqueous solution (MS-solution), which contains the respective metals of interest and impurities in the form of sulfate salts and may be subjected to further purification to prepare battery-grade metal sulfates for battery precursor synthesis.

Fig. 2 is a schematic flowchart illustrating another embodiment of the process according to the present disclosure, which applies a series setup and in which BM is used as a lithium-containing feedstock and a Ni-MHP is used as a metal-based raw material feedstock.

With reference to Fig. 2, black mass obtained for example from crushed lithium-ion batteries containing Li and Ni, Co and/or Mn as metals of interest and metal impurities such as Fe, Al, Cu, Zn, Mg, K and Ca, is leached (E) first, for example in a continuous process employing a CSTR, by reductive acid leaching using a leaching solution of concentrated H₂SO₄, H₂O₂ (50% by weight) and water. By the BM leaching (E), all the metals of interest (i.e. Li and Ni, Co and/or Mn) and impurities contained in the BM are dissolved in the leachate (BM-leachate) in the form of their sulfate salts, leaving behind graphite as an undissolved fraction. The undissolved graphite is separated from the BM-leachate by filtration (F1) and is optionally washed with water to remove leftovers of leachate solution. The BM-leachate obtained after separation of the undissolved fraction is then mixed with Ni-MHP, which may contain Ni and Co and/or Mn as metals of interest and metal impurities such as Zn, Mg, and Ca, to carry out Ni-MHP leaching (G), for example in a continuous process employing another CSTR, through reductive acid leaching using the BM-leachate, additional H₂O₂ (50% by weight) and water as a leaching solution. By the Ni-MHP leaching (G), the Ni-MHP fed may be completely dissolved so that no solid residue is obtained after the leaching (G). In this case, an additional separation step may not be carried out. However, in case the Ni-MHP fed is not completely dissolved, the solid residue obtained after the Ni-MHP leaching (G) is separated from the leachate by filtration (F2).

The leachate obtained after Ni-MHP leaching (G) and optional filtration step (F2) forms a metal-sulfate containing aqueous solution (MS-solution), which contains the respective metals of interest and impurities in the form of sulfate salts and may be subjected to further purification to prepare battery-grade metal sulfates for battery precursor synthesis.

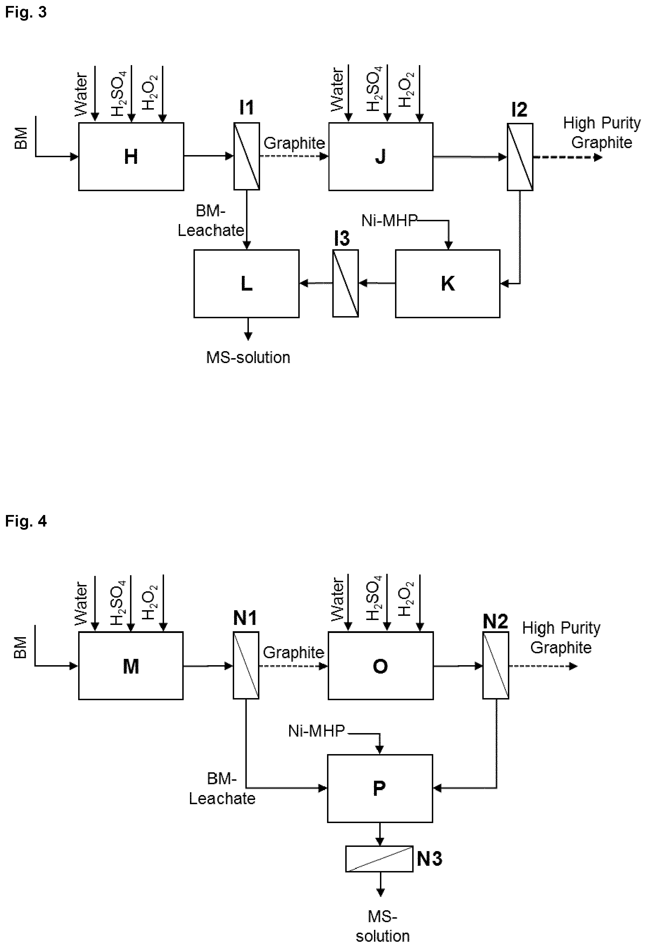

Fig. 3 is a schematic flowchart illustrating another embodiment of the process according to the present disclosure, in which BM is used as a lithium-containing feedstock and a Ni-MHP is used as a metal-based raw material feedstock, and in which an additional graphite leaching step is carried out.

With reference to Fig. 3, black mass obtained for example from crushed lithium-ion batteries containing Li and Ni, Co and/or Mn as metals of interest and metal impurities such as Fe, Al, Cu, Zn, Mg, K and Ca, is leached (H), for example in a continuous process employing a CSTR, by reductive acid leaching using a leaching solution of concentrated H₂SO₄, H₂O₂ (50% by weight) and water. By the BM leaching (H), all the metals of interest (i.e. Li and Ni, Co and/or Mn) and impurities contained in the BM are dissolved in the leachate (BM-leachate) in the form of their sulfate salts, leaving behind graphite as an undissolved fraction. The undissolved graphite is separated from the BM-leachate by filtration (11). The separated graphite is then leached (J), for example in a continuous process employing another CSTR, by reductive acid leaching using a leaching solution of concentrated H₂SO₄, H₂O₂ (50% by weight) and water. By the graphite leaching (J), the metals of interest (i.e. Li and Ni, Co and/or Mn) and impurities still contained in the graphite are dissolved in the leachate in the form of their sulfate salts, leaving behind the undissolved graphite. The undissolved graphite is separated from the leachate by filtration (12) to obtain, after optional washing with water to remove leftovers of leachate solution, high purity graphite, which may for example be utilized in upcycling processes in the production of anode material.

The leachate obtained from graphite leaching (J), after separation of the undissolved graphite, is then mixed with Ni-MHP, which may contain Ni and Co and/or Mn as metals of interest and metal impurities such as Zn, Mg, and Ca, to carry out Ni-MHP leaching (K), for example in a continuous process employing another CSTR, through reductive acid leaching using the leachate obtained from graphite leaching (J), additional H₂O₂ (50% by weight) and water as a leaching solution. By the Ni-MHP leaching (K), the Ni-MHP fed may be completely dissolved so that no solid residue is obtained after the leaching (K). In this case, an additional separation step may not be carried out. However, in case the Ni-MHP fed is not completely dissolved, the solid residue obtained after the Ni-MHP leaching (K) is separated from the leachate by filtration (13).

The BM-leachate and the leachate obtained from the Ni-MHP leaching are then mixed together (L), for example in a BSTR, to obtain a metal-sulfate containing aqueous solution (MS-solution), which contains the respective metals of interest and impurities in the form of sulfate salts and may be subjected to further purification to prepare battery-grade metal sulfates for battery precursor synthesis

Fig. 4 is a schematic flowchart illustrating another embodiment of the process according to the present disclosure, in which BM is used as a lithium-containing feedstock and a Ni-MHP is used as a metal-based raw material feedstock, and in which an additional graphite leaching step is carried out.

With reference to Fig. 4, black mass obtained for example from crushed lithium-ion batteries containing Li and Ni, Co and/or Mn as metals of interest and metal impurities such as Fe, Al, Cu, Zn, Mg, K and Ca, is leached (M), for example in a continuous process employing a CSTR, by reductive acid leaching using a leaching solution of concentrated H₂SO₄, H₂O₂ (50% by weight) and water. By the BM leaching (M), all the metals of interest (i.e. Li and Ni, Co and/or Mn) and impurities contained in the BM are dissolved in the leachate (BM-leachate) in the form of their sulfate salts, leaving behind graphite as an undissolved fraction. The undissolved graphite is separated from the BM-leachate by filtration (N1). The separated graphite is then leached (O), for example in a continuous process employing another CSTR, by reductive acid leaching using a leaching solution of concentrated H₂SO₄, H₂O₂ (50% by weight) and water. By the graphite leaching (O), the metals of interest (i.e. Li and Ni, Co and/or Mn) and impurities still contained in the graphite are dissolved in the leachate in the form of their sulfate salts, leaving behind the undissolved graphite. The undissolved graphite is separated from the leachate by filtration (N2) to obtain, after optional washing with water to remove leftovers of leachate solution, high purity graphite, which may for example be utilized in upcycling processes in the production of anode material.

The BM-leachate and the leachate obtained from graphite leaching (O), after separation of the undissolved graphite, are mixed and Ni-MHP, which may contain Ni and Co and/or Mn as metals of interest and metal impurities such as Zn, Mg, and Ca, is added to carry out Ni-MHP leaching (P), for example in a continuous process employing another CSTR, through reductive acid leaching using the mixed leachates, additional H₂O₂ (50% by weight) and water as a leaching solution. By the Ni-MHP leaching (P), the Ni-MHP fed may be completely dissolved so that no solid residue is obtained after the leaching (P). In this case, an additional separation step may not be carried out. However, in case the Ni-MHP fed is not completely dissolved, the solid residue obtained after the Ni-MHP leaching (P) is separated from the leachate by filtration (N3)

The leachate obtained after Ni-MHP leaching (P) and optional filtration step (N3) forms a metal-sulfate containing aqueous solution (MS-solution), which contains the respective metals of interest and impurities in the form of sulfate salts and may be subjected to further purification to prepare battery-grade metal sulfates for battery precursor synthesis.

### DETAILED DESCRIPTION

The technical solutions of the embodiments of this application will be described in more detail below with reference to the accompanying drawing. It is obvious that the embodiments to be described are a part rather than all of the embodiments of this application. The features of various embodiments can be combined to form further exemplary aspects of the present disclosure that may not be explicitly described or illustrated. All other embodiments obtained by persons of ordinary skill in the art based on the embodiments of the present invention without making creative efforts shall fall within the protection scope of the present invention. Further it is to be understood that the words and terms employed herein are used for describing specific embodiments only, and is not intended to be limiting, since the scope of the present invention is defined by the appended claims and equivalents thereof.

The present disclosure provides for a process for generating a metal-containing aqueous solution, the process comprising:
- carrying out a first acid leaching on a lithium-containing feedstock to obtain a first leachate and using a first leaching solution; and
- carrying out a second acid leaching on a metal-based raw material feedstock to obtain a second leachate and using a second leaching solution,
to form the metal-containing aqueous solution.

The lithium-containing feedstock employed for the first acid leaching may be selected from recycled materials feedstocks, for example spent battery materials. In preferred embodiments, the lithium-containing feedstock is selected from recycled materials feedstocks including, without being limited thereto, material derived from crushed lithium-ion batteries, in particular lithium ion batteries employing lithium transition metal composite oxides as the cathode active material (so-called "NCM-based lithium-ion batteries"), or lithium-ion battery manufacturing scrap, in particular NCM-based lithium-ion battery manufacturing scrap, or a combination thereof, which material is collectively referred to herein as "black mass".

Within the framework of this application, the term "battery" is intended to include a battery cell, a battery module, which typically contains a plurality of battery cells, and a battery pack, which typically contains a plurality of battery modules. Further, within the framework of this application, the term "battery" is intended to include both disposable and rechargeable (also referred to as "secondary") batteries.

The crushing of batteries is typically a process step in the recycling of batteries in order to recover valuable battery materials included therein, in particular the cathode materials. Recycling of batteries usually starts by sorting waste or spent batteries according to their chemical composition, and then crushing or shredding them to obtain a size-reduced battery material. A battery comprises various materials, including plastics and metals that make up the battery housing, the separator, the cathode and anode materials, and an electrolyte. After crushing, a series of filtering and sieving steps are performed to separate plastic and metal shreds and to finally obtain a refined crushed battery material, the so-called "black mass", as the product, which mainly contains cathode materials and anode materials, but may also contain for example electrolyte materials. However, the composition of black mass typically varies depending on the types of batteries subjected to crushing, because the sorting of the batteries is often difficult or neglected.

The terms "cathode material" and "cathode active material" are used interchangeably to describe the materials or metals which constitute the primary active component of the cathode. In lithium-ion batteries, lithium transition metal composite oxides including active metals nickel (Ni), cobalt (Co) and/or manganese (Mn) (so-called "NCM metals"), or lithium iron phosphate (LiFePO₄) are typically used as the cathode active material. Common examples of lithium transition metal composite oxides are lithium cobalt oxide (LiCoO₂), lithium nickel oxide (LiNiO₂), lithium manganese oxide (LiMn₂O₄), lithium nickel cobalt oxide (LiNiₓCo₁₋ₓO2 (0<x<1) or LiNi_{1-x-y}CoₓAl_{y}O₂ ((0<x<0.2, 0<y≤0.1)) as well as lithium nickel cobalt manganese (NCM) oxide (LiNi_{1-x-y}COₓMn_{y}O₂ (0<x+y<1)).

The terms "anode material" and "anode active material" are used interchangeably to describe the materials or metals which constitute the primary active component of the anode. Typically, lithium-ion batteries use graphite powder as an anode material. However, as used herein the terms "anode material" and "anode active material" should be understood to also comprise natural and artificial graphite, activated carbon, carbon black, conductive additives, lithium titanate (LTO), silicon, silicon-based materials such as SiOₓ and SiC, and high-performance powdered graphene.

The electrolyte of lithium-ion batteries is liquid and typically contains fluoride containing salts such as lithium hexafluorophosphate (LiPF₆), lithium tetrafluoroborate (LiBF₄), lithium trifluoromethanesulfonate (LiCF₃SO₃), lithium bis((bistrifluoromethanesulphonyl) (LiTFSI), or lithium fluoroalkylphosphates dissolved in an organic solvent, for example, mixtures of alkyl carbonates, e.g. C₁-C₆ alkyl carbonates such as ethylene carbonate (EC), ethyl methyl carbonate (EMC), dimethyl carbonate (DMC), diethyl carbonate (DEC), propylene carbonate (PC).

Black mass obtained from crushed lithium-ion batteries and/or lithium-ion battery manufacturing scrap therefore typically contains Li and one or more of Ni, Co and Mn. For example, black mass obtained from crushed lithium-ion batteries may have a composition of about 28-40 wt.% Ni, Co and/or Mn, about 3-5 wt.% Li, about 30-40 wt.% graphite, about 2-5 wt.% of metallic impurities such as Al, Cu, Fe and/or Mg, about 1-2 wt.% organic compounds, about 1 wt.% of other impurities such as Ca, P, Si, Zn, K and/or Na, and about 1-2 wt.% fluoride, but other composition are also possible.

According to preferred embodiments of the process described herein, the lithium-containing feedstock employed for the first acid leaching comprises, besides Li, one or more of Ni, Co and Mn, more preferably two or more of Ni, Co and Mn, and even more preferably comprises Ni, Co and Mn; and is further preferably black mass derived from crushed lithium-ion batteries, in particular crushed NCM-based lithium-ion batteries.

In further preferred embodiments, the process of the present disclosure further comprises, before carrying out the first acid leaching, a step of providing a lithium-containing feedstock, which step comprises crushing or shredding one or more lithium-ion batteries, in particular one or more NCM-based lithium-ion batteries, to obtain black mass, in particular black mass comprising lithium and one or more of active metals nickel, cobalt and manganese. It should be noted that the method and device for crushing or shredding batteries are not particularly limited, and methods and devices suitable for crushing or shredding batteries and battery materials known to those skilled in the art can be used as desired.

The metal-based raw material feedstock for the second acid leaching is preferably a raw material feedstock comprising one or more of nickel, cobalt and manganese, more preferably two or more of nickel, cobalt and manganese, and even more preferably nickel, cobalt and manganese, as the metal(s). Suitable examples of raw material feedstocks include, but are not limited to, metal-containing concentrates, such as nickel sulfide concentrate or cobalt sulfide concentrate; mixed hydroxide precipitates (MHPs), such as mixed nickel hydroxide precipitates (Ni-based MHPs), mixed cobalt hydroxide precipitates (Co-based MHPs) or mixed manganese hydroxide precipitates (Mn-based MHPs), or combinations thereof like mixed nickel-cobalt hydroxide precipitates; mixed sulfide precipitates (MSPs), such as mixed nickel sulfide precipitates (Ni-based MSPs), mixed cobalt sulfide precipitates (Co-based MSPs) or mixed manganese sulfide precipitates (Mn-based MSPs), or combinations thereof; mattes such as nickel matte; nickel laterite; ferronickel; or any combination thereof. In preferred embodiments, the metal-based raw material feedstock is selected from MHPs, more preferably from mixed nickel hydroxide precipitate (Ni-based MHP). In still further preferred embodiments of the process of the present disclosure, the metal-based raw material feedstock for the second acid leaching is free of lithium.

The terms mixed hydroxide precipitate (MHP) and mixed sulfide precipitate (MSP) are known to a person skilled in the field of Li-battery manufacturing. In particular, mixed hydroxide precipitation is a relatively recent large scale industrial technology. For example, mixed nickel hydroxide precipitate (Ni-based MHP) is typically an intermediate product produced from processing a nickel laterite or nickel sulfide ore through a hydrometallurgical route and contains nickel together with variable quantities of cobalt and/or manganese and further metals and/or impurities.

Mixed nickel hydroxide precipitate (Ni-based MHP) suitable for being used in the process of the present disclosure typically may have a composition of about 35-45 wt.% Ni, about 4-7 wt.% Mn, about 3-5 wt.% Co, about 2-3 wt.% of impurities such as Mg, Ca, P or Zn, and about 45-55 wt.% H₂O, but other composition are also possible.

In further preferred embodiments, the metal in the metal-containing aqueous solution comprises lithium and one or more of nickel, cobalt and manganese. In further preferred embodiments, the metal comprises lithium, and two or more of nickel, cobalt and manganese. In still further preferred embodiments, the metal comprises lithium, nickel, cobalt and manganese.

For carrying out the first acid leaching, said lithium-containing feedstock is treated with a leaching solution as will be described below with respect to the embodiments of the process according to the present disclosure, to thereby dissolve lithium and any other metals contained in the feedstock in their ionic forms in the leachate. Generally, said lithium-containing feedstock is leached under conditions to form as the leachate an aqueous solution containing the respective metal salts, for example metal sulfates.

Similarly, for carrying out the second acid leaching, said metal-based raw material feedstock is treated with a leaching agent as will be described below with respect to the embodiments of the process according to the present disclosure, to thereby dissolve any metals contained in the feedstock in their ionic forms in the leachate. Generally, said metal-based raw material feedstock is leached under conditions to form as the leachate an aqueous solution containing the respective metal salts, for example metal sulfates.

It should be understood that during the leaching operations described herein not only the metals of interest contained in the employed feedstocks, that is, Li and cathode active metals Ni, Co and Mn, are transferred to the respective aqueous solutions/leachates and dissolved therein as metal salts (e.g., metal sulfates such as uncrystallized lithium sulfate (Li₂SO₄), nickel sulfate (NiSO₄), cobalt sulfate (COSO₄), manganese sulfate (MnSO₄)), but also undesired metals such as Cu, Mg or Na, so that the leachates and aqueous solution obtained from the leaching operations described herein also contain undesired metals/metal salts (e.g. uncrystallized copper sulfate (CuSO₄), magnesium sulfate (tvtgSC'₄), sodium sulfate (N3₂80₄), etc.). It primarily depends on the composition of the feedstocks or black mass employed which of cathode active metals Ni, Co, and Mn, and which undesired metals are finally contained besides Li in the leachates and aqueous solution formed, and also their respective amounts or concentrations in the leachates or formed aqueous solution depends on the composition of the feedstocks or black mass employed, but also on the conditions applied during the leaching operations described herein including the first acid leaching and the second acid leaching.

According to a preferred embodiment, acid leaching is carried out in the presence of an acidic leaching reagent. That is, according to this preferred embodiment the first leaching solution for carrying out the first acid leaching on the lithium-containing feedstock and the second leaching solution for carrying out the second acid leaching on the metal-based raw material feedstock independently from one another comprise an acidic leaching reagent. "Independently" here means that the acidic leaching reagent and its concentration can be independently selected for the first and the second leaching solution.

Still further preferably according to the process of the present disclosure, the acidic leaching reagent in connection with the first acid leaching and the second acid leaching is independently selected from sulfuric acid, nitric acid, hydrochloric acid, citric acid, and any combination thereof, and is more preferably selected form sulfuric acid. The acids may be used as concentrated acids, or as aqueous or diluted acids, as required. The concentration of acid may be varied in a wide range, for example 0.1 to 98% by weight, and preferably in a range between 10 and 98% by weight.

According to a further preferred embodiment, the first and/or second acid leaching is carried out in the presence of a reducing agent in order to enhance the leaching yield, but also to transfer metal ions to the correct oxidation state, if required. That is, according to this further preferred embodiment either the first leaching solution for carrying out the first acid leaching on the lithium-containing feedstock comprises a reducing agent or the second leaching solution for carrying out the second acid leaching on the metal-based raw material feedstock comprises a reducing agent or both, the first leaching solution and the second leaching solution comprise a reducing agent.

The reducing agent for the first acid leaching and the second acid leaching is not particularly limited, and can be independently selected for both leaching operations. Preferred reducing agents for carrying out the first acid leaching and the second acid leaching are those that do not leave impurities based upon metals, in particular metals other than Ni, Co, or Mn. Examples of reducing agents are organic reducing agents such as methanol, ethanol, sugars, ascorbic acid, urea, starch or cellulose, and inorganic reducing agents such as hydrazine and salts thereof, such as the sulfate, and hydrogen peroxide. Hydrogen peroxide (H₂O₂) is the preferred reducing agent for the first acid leaching and/or the second acid leaching.

Therefore, in a still further preferred embodiment the first and/or second leaching solution comprises a reducing agent, which is selected from hydrogen peroxide, hydrazine and its salts, methanol, ethanol, sugars, ascorbic acid, urea, starch, cellulose, and any combination thereof, and is more preferably selected form hydrogen peroxide.

According to a further preferred embodiment of the process according to the present disclosure, a total concentration of metals of interest in the first leachate obtained from carrying out the first acid leaching on the lithium-containing feedstock and/or in the second leachate obtained from carrying out the second acid leaching on the metal-based raw material feedstock is controlled to be in a range fully below the solubility limit of the respective metals by addition of water during the first acid leaching and the second acid leaching, respectively.

Within the framework of the present disclosure, the metals of interest in general are lithium and cathode active metals nickel, cobalt and manganese, as far as present. This means, as already indicated above, that not necessarily all of these metals of interest have to be present in the feedstocks employed, except lithium, which mandatorily is present in the lithium-containing feedstock. For example, in case the lithium-containing feedstock employed for the first acid leaching originates from LIBs employing a lithium NCM oxide as the cathode active material, the metals of interest contained therein are Li, Ni, Co and Mn. For example, in case the metal-based raw material feedstock employed for the second acid leaching is MHP, the metals of interest contained therein is one or more of Ni, Co and Mn.

As used herein, the term "total concentration" should be understood to mean the sum of the concentrations of all metals of interest present in the respective leachate. For example, if Li and Ni are the only metals of interest contained in a leachate, the total concentration is the sum of the Ni concentration and the Li concentration in the leachate, and so on.

More preferably, the total concentration of the metals of interest, i.e., Li and preferably Ni, Co and/or Mn, in the first leachate obtained from carrying out the first acid leaching on the lithium-containing feedstock is controlled to be in the range of 80 g/L to 120 g/L by addition of water during the first acid leaching

More preferably, the total concentration of the metals of interest, preferably Ni, Co and/or Mn, in the second leachate obtained from carrying out the second acid leaching on the metal-based raw material feedstock is controlled to be in the range of 80 g/L to 120 g/L by addition of water during the second acid leaching.

By keeping the concentration of the metals of interest leached from the feedstocks within these ranges, it may be ensured to remain under the solubility limit of the respective metals in the aqueous solutions of first and second leachates, even if optimal leaching conditions based on leaching yields of >99% are achieved.

The amounts of the acidic leaching reagent, in particular sulfuric acid, the reducing agent, in particular hydrogen peroxide, and water to be added can be modified according to needs for the first acid leaching and the second acid leaching, making it possible, for example, to avoid 100% leaching yield of impurities and certain metals like manganese when leaching the metal-based raw material feedstock, if necessary, by decreasing the amount of reducing agent added in the second acid leaching, or making it possible to obtain higher leaching yield for NCM metals of more than 99,9% when leaching the lithium-containing feedstock by leaching in a more concentrated acidic leaching reagent.

The process conditions for carrying out the leaching operations described herein, including the first acid leaching, the second acid leaching and the third acid leaching that will be described below, are not particularly limited and may be independently selected, and may also include leaching feedstocks under conditions such as pressure leaching or pressure oxidation, as long as the metals will be furnished as aqueous solutions of their salts, e.g. sulfate salts, to obtain the metal-containing aqueous solution. Preferably according to the present disclosure, a temperature for carrying out leaching is independently for each leaching operation described herein in the range of 40°C to 60°C. Further preferably according to the present disclosure, a pressure for carrying out leaching is independently for each leaching operation described herein atmospheric pressure (i.e., about 1 bar). Further preferably according to the present disclosure, a leaching duration is independently for each leaching operation described herein in the range of 10 minutes to 10 hours, preferably 1 to 3 hours.

A vessel or reactor for carrying out the leaching operations described herein, including the first acid leaching, the second acid leaching and the third acid leaching that will be described below, is not particularly limited, as long as it is protected against (strong) acids. For example, a Batch Stirred-Tank Reactor (BSTR) or a Continuous Stirred-Tank Reactor (CSTR) may be employed. In preferred embodiments of the present disclosure, the acid leaching on the lithium-containing feedstock (i.e., the first acid leaching) is carried out in a continuous process employing a CSTR, the acid leaching on the metal-based raw material feedstock (i.e., the second acid leaching) is carried out in a one-step process employing a BSTR, and a third acid leaching that will be described below is carried out in a continuous process employing another CSTR.

According to a first embodiment of the process according to the present disclosure, the first acid leaching on the lithium-containing feedstock and the second acid leaching on the metal-based raw material feedstock are carried out in a parallel setup, for example in separated vessel or reactors, as explained above with reference to Fig. 1. The process according to this embodiment further comprises a step of mixing the first leachate obtained from the first acid leaching on the lithium-containing feedstock and the second leachate obtained from the second acid leaching on the metal-based raw material feedstock to thereby form the metal-containing aqueous solution.

By mixing of the leachates obtained from leaching the lithium-containing feedstock (i.e., the first leachate) and from leaching the metal-based raw material feedstock (i.e., the second leachate), the content of cathode active metals Ni, Co and/or Mn in the combined leachate (i.e. the formed metal-containing aqueous solution) can be increased while the concentration of impurities can be decreased compared to a leachate obtained from leaching a lithium-containing feedstock only.

Preferably according to this embodiment of the process according to the present disclosure, the first leaching solution for carrying out the first acid leaching on the lithium-containing feedstock comprises the acidic leaching reagent, which is preferably selected from sulfuric acid, nitric acid, hydrochloric acid, citric acid, and any combination thereof, and more preferably is sulfuric acid, in an amount of 8 wt.% to 43 wt.%, more preferably 15 wt.% to 25 wt.%, in excess over a stoichiometric.

As used herein, the term "in excess over a stoichiometric" in connection with the amount of acidic leaching reagent is related to the overall amount of metals of interest actually contained in the feedstocks employed in the leaching operations defined herein, which amount is usually known and can be easily calculated for example from manufacturer specifications in advance of any leaching or recycling process.

Hence, according to this embodiment, the first leaching solution preferably comprises the acidic leaching reagent in an amount of 8 wt.% to 43 wt.%, preferably 15 wt.% to 25 wt.%, in excess over the stoichiometric amount (theoretically) needed to leach/dissolve substantially all (that means more than 99%) of the metals of interest, i.e. Li and preferably active metals Ni, Co and/or Mn, from the lithium-containing feedstock.

It has been found that within this excess amount of acidic leaching reagent for carrying out the first acid leaching optimal leaching conditions in this embodiment may be obtained to ensure an optimum balance between maximum leaching yield of metals of interest, i.e., Li and, if present, Ni, Co and/or Mn, from the lithium-containing feedstock and minimum consumption of leaching reagent. That is, if the excess amount of acidic leaching reagent for carrying out the first acid leaching on the lithium-containing feedstock is below the above-defined range, the leaching yield from the feedstock is low. If the excess amount of acidic leaching reagent for carrying out the first acid leaching is above the above-defined range, the consumption of acidic leaching reagent increases without significant further increase of the leaching yield of the metals of interest from the feedstock.

Within the framework of the present application, the leaching yield is defined by the formula: leaching yield (%) = (1 - amount of metals of interest in residual solid (g)/amount of metals of interest in feedstock (g)) x 100

Preferably according to this embodiment, and independently from the first leaching solution, the second leaching solution for carrying out the second acid leaching on the metal-based raw material feedstock comprises the acidic leaching reagent, which is preferably selected from sulfuric acid, nitric acid, hydrochloric acid, citric acid, and any combination thereof, and more preferably is sulfuric acid, in an amount of 0 wt.% (i.e., no excess, but stoichiometric amount of acidic leaching reagent) to 10 wt.% in excess over the stoichiometric as defined above, more preferably 0 wt.% to 5 wt.% in excess over the stoichiometric as defined above.

Hence, according to this embodiment, the second leaching solution preferably comprises the acidic leaching reagent in an amount of 0 wt.% to 10 wt.%, more preferably 0 wt.% to 5 wt.% in excess over the stoichiometric amount (theoretically) needed to leach/dissolve substantially all (that means more than 99%) of metals of interest, preferably Ni, Co and/or Mn, from the metal-based raw material feedstock.

It has been found that within this (excess) amount of acidic leaching reagent for carrying out the second acid leaching optimal leaching conditions may be obtained to ensure complete dissolving of the metal-based raw material feedstock (i.e. with substantially no solid residue after leaching) with minimum consumption of leaching reagent.

As mentioned before, it may be preferred to carry out the first and/or second acid leaching in the presence of a reducing agent.

Further preferably according to this embodiment of the process according to the present disclosure, the first leaching solution for carrying out the first acid leaching on the lithium-containing feedstock comprises the reducing agent in an amount of 3 vol.% to 7 vol.%, more preferably 4 vol.% to 6 vol.%, based on a total volume of the first leaching solution. As mentioned before, the reducing agent for carrying out the first acid leaching is not particularly limited, but preferably is selected from hydrogen peroxide, hydrazine and its salts, methanol, ethanol, sugars, ascorbic acid, urea, starch, cellulose and any combination thereof, and more preferably is selected form hydrogen peroxide.

It has been found that this amount of reducing agent for carrying out the first acid leaching on the lithium-containing feedstock advantageously allows for reducing the amount of acidic leaching agent needed, while optimal conditions based on maximizing leaching yield for the metals of interest, i.e. Li and, if present, Ni, Co and/or Mn, from the lithium-containing feedstock can be ensured.

Further preferably according to this embodiment, and independently from the first leaching solution, the second leaching solution for carrying out the second acid leaching on the metal-based raw material feedstock comprises the reducing agent in an amount of 0.1 vol.% to 3 vol.%, more preferably 0.5 vol.% to 1.5 vol.%, based on a total volume of the second leaching solution. As mentioned before, the reducing agent for carrying out the second acid leaching is not particularly limited, but preferably is selected from hydrogen peroxide, hydrazine and its salts, methanol, ethanol, sugars, ascorbic acid, urea, starch, cellulose and any combination thereof, and more preferably is selected form hydrogen peroxide.

It has been found that this amount of reducing agent for carrying out the second acid leaching on the metal-based raw material feedstock advantageously allows for reducing the amount of acidic leaching agent needed, while optimal conditions for completely dissolving the metal-based raw material feedstock (i.e. with substantially no solid residue after leaching) can be ensured.

Accordingly, it is still further preferably according to this embodiment of the process of the present disclosure that the first leaching solution for carrying out the first acid leaching on the lithium-containing feedstock comprises an acidic leaching reagent, which is preferably sulfuric acid, in an amount of 8 wt.% to 43 wt.%, more preferably 15 wt.% to 25 wt.%, in excess over the stoichiometric and a reducing agent, which is preferably hydrogen peroxide, in an amount of 3 vol.% to 7 vol.%, more preferably 4 vol.% to 6 vol.%, based on a total volume of the first leaching solution, and that the second leaching solution for carrying out the second acid leaching on the metal-based raw material feedstock comprises an acidic leaching reagent, which is preferably sulfuric acid, in an amount of 0 wt.% to 10 wt.%, more preferably 0 wt.% to 5 wt.%, in excess over the stoichiometric and a reducing agent, which is preferably hydrogen peroxide, in an amount of 0.1 vol.% to 3 vol.%, more preferably 0.5 vol.% to 1.5 vol.%, based on a total volume of the second leaching solution.

According to the first embodiment of the process of the present disclosure, the first leachate obtained from the first acid leaching on the lithium-containing feedstock may have a pH value of 0.3 to 0.5 and the second leachate obtained from the second acid leaching on the metal-based raw material feedstock may have a pH value of 1.0 to 1.5. The pH of the combined leachates, i.e. the metal-containing aqueous solution formed after mixing the first and second leachates, according to this embodiment may be in a range of 0.8 to 1.

This means, by mixing of the leachates obtained from leaching the lithium-containing feedstock (i.e., the first leachate) and from leaching the metal-based raw material feedstock (i.e., the second leachate), the pH of the resulting combined leachate (i.e. the formed metal-containing aqueous solution) is advantageously increased without additional adding of a base or basic compound compared to a case of leaching the lithium-containing feedstock only (i.e., without the second acid leaching on the metal-based raw material feedstock), while the content of cathode active metals Ni, Co and/or Mn can be increased and the concentration of impurities such as Cu, Mg or Na can be decreased in the combined leachate as mentioned above.

Further preferably according to this embodiment of the process of the present disclosure the resulting combined leachate (i.e. the formed metal-containing aqueous solution) may have a density of 1.1 to 1.6, more preferably 1.2 to 1.4 g/mL.

In accordance with the first embodiment mentioned above, the present disclosure in a particularly preferred embodiment therefore provides for a process for generating a metal-containing aqueous solution, the process comprising:
- carrying out a first acid leaching on a lithium-containing feedstock to obtain a first leachate and using a first aqueous leaching solution that comprises an acidic leaching reagent and a reducing agent;
- carrying out a second acid leaching on a metal-based raw material feedstock to obtain a second leachate and using a second aqueous leaching solution that comprises an acidic leaching reagent and a reducing agent; and
- mixing the first leachate obtained from the first acid leaching and the second leachate obtained from the second acid leaching to form the metal-containing aqueous solution.

The above-mentioned preferred leaching conditions also apply for this particularly preferred process.

According to a second embodiment of the process according to the present disclosure, the first acid leaching on the lithium-containing feedstock and the second acid leaching on the metal-based raw material feedstock are carried out in a series setup, for example in separated vessel or reactors, as explained above with reference to Fig. 2.

According to this embodiment, acid leaching on a lithium-containing feedstock is first carried out, and the first leachate obtained from the first acid leaching, which consequently contains the metals leached from the lithium-containing feedstock, is then used as the second leaching solution for carrying out the second acid leaching on a metal-based raw material feedstock. According to this embodiment, the leachate resulting from leaching the metal-based raw material feedstock (i.e., the second leachate), which consequently contains the metals leached from the lithium-containing feedstock and from the metal-based raw material feedstock (i.e. from the first and the second leaching operations) forms the metal-containing aqueous solution.

Preferably according to this embodiment of the process according to the present disclosure, the first leaching solution for carrying out the first acid leaching on the lithium-containing feedstock comprises the acidic leaching reagent, which is preferably selected from sulfuric acid, nitric acid, hydrochloric acid, citric acid, and any combination thereof, and more preferably is sulfuric acid, in an amount of equal to or more than 20 wt.%, preferably 20 wt.% to 60 wt.%, more preferably 50 wt.% to 60 wt.%, in excess over the stoichiometric as defined above.

Hence, according to this preferred embodiment, the first leaching solution comprises the acidic leaching reagent in an amount of equal to or more than 20 wt.%, preferably 20 wt.% to 60 wt.%, more preferably 50 wt.% to 60 wt.%, in excess over the stoichiometric amount (theoretically) needed to leach/dissolve substantially all (that means more than 99%) of the metals of interest, i.e. Li and preferably Ni, Co and/or Mn, from the lithium-containing feedstock.

It has been found that within this excess amount of acidic leaching reagent for carrying out the first acid leaching optimal leaching conditions may be obtained in this embodiment to ensure maximum leaching yield of metals of interest, i.e., Li and, if present Ni, Co and/or Mn, from the lithium-containing feedstock, while allowing to modify and control the leaching conditions for the second acid leaching on the metal-based raw material feedstock according to needs.

As mentioned before, it may be preferred to carry out the first and/or second acid leaching in the presence of a reducing agent.

Further preferably according to the scond embodiment of the process according to the present disclosure, the first leaching solution for carrying out the first acid leaching on the lithium-containing feedstock comprises a reducing agent in an amount of 3 vol.% to 5 vol.%, based on a total volume of the first leaching solution. As mentioned before, the reducing agent for carrying out the first acid leaching is not particularly limited, but preferably is selected from hydrogen peroxide, hydrazine and its salts, methanol, ethanol, sugars, ascorbic acid, urea, starch, cellulose and any combination thereof, and more preferably is selected form hydrogen peroxide.

It has been found that in this embodiment such amount of reducing agent for carrying out the first acid leaching on the lithium-containing feedstock advantageously allows for reducing the amount of acidic leaching agent needed, while optimal conditions based on maximizing leaching yield for the metals of interest, i.e. Li and, if present, Ni, Co and/or Mn, from the lithium-containing feedstock can be ensured.

Accordingly, it is still further preferably according to this embodiment of the process of the present disclosure that the first leaching solution for carrying out the first acid leaching on the lithium-containing feedstock comprises an acidic leaching reagent, which is preferably sulfuric acid, in an amount of equal to or more than 20 wt.%, preferably 20 wt.% to 60 wt.%, more preferably 50 wt.% to 60 wt.%, in excess over the stoichiometric and a reducing agent, which is preferably hydrogen peroxide, in an amount of 3 vol.% to 5 vol.%, based on a total volume of the first leaching solution.

As mentioned above, according to the second embodiment of the process of the present disclosure the leachate obtained from leaching the lithium-containing feedstock (i.e., the first leachate) is used as a leaching solution for carrying out the second acid leaching on a metal-based raw material feedstock (i.e. a second leaching solution). Consequently, the second leaching solution in this embodiment contains the metals leached from the lithium-containing feedstock, but also as an acidic leaching reagent the acidic leaching reagent used for carrying out the first acid leaching, preferably sulfuric acid, and optionally also the reducing agent and water if added in the first acid leaching.

It may however be further preferable according to this embodiment of the process of the present disclosure to add additional water, in particular such that a total concentration of the metals of interest in the second leachate obtained from carrying out the second acid leaching on the metal-based raw material feedstock using the first leachate as the second leaching solution is controlled to be in a range fully below the solubility limit of the respective metals, more preferably in the range of 80 g/L to 120 g/L, by addition of water to during the second acid leaching, in order to ensure to remain under the solubility limit of the respective metals even if optimal leaching conditions based on leaching yields of >99% are achieved.

Also, it may be further preferable according to this embodiment of the process of the present disclosure to add additional reducing agent, which preferably is selected from hydrogen peroxide, hydrazine and its salts, methanol, ethanol, sugars, ascorbic acid, urea, starch, cellulose and any combination thereof, and more preferably is selected form hydrogen peroxide, and in particular in such amount that the second leaching solution for carrying out the second acid leaching on the metal-based raw material feedstock comprises the reducing agent in an amount of 0.4 vol.% to 0.8 vol.%, based on a total volume of the second leaching solution.

It has been found that in this embodiment such amount of reducing agent for carrying out the second acid leaching on the metal-based raw material feedstock advantageously allows for reducing the amount of acidic leaching agent needed, while optimal conditions for completely dissolving the metal-based raw material feedstock (i.e. with substantially no solid residue after leaching) can be ensured.

According to the second embodiment of the process of the present disclosure, the first leachate obtained from the first acid leaching on the lithium-containing feedstock may have a pH value of 0.1 to 0.4. After the second acid leaching on the metal-based raw material feedstock using the first leachate as the second leaching solution, due to the consumption of free acid by the ions present in the metal-based raw material feedstock, e.g. hydroxide ions, the resulting second leachate which forms the metal-containing aqueous solution may have a pH value in a range of 0.8 to 1.

Further preferably according to this embodiment of the process of the present disclosure the resulting second leachate which forms the metal-containing aqueous solution may have a density of 1.1 to 1.6, more preferably 1.2 to 1.4 g/mL.

This embodiment of the process according to the present disclosure, which applies a series setup for carrying out the first acid leaching on the lithium-containing feedstock and the second acid leaching on the metal-based raw material feedstock, as described above, therefore advantageously allows for increasing the pH of the resulting metal-containing aqueous solution without additional adding of a base or basic compound compared to a case of leaching the lithium-containing feedstock only (i.e., without the second acid leaching on the metal-based raw material feedstock), while the content of cathode active metals Ni, Co and/or Mn can be increased and the concentration of impurities such as Cu, Mg or Na can be decreased in the resulting aqueous solution.

Further advantageously, due to the series setup the consumption of chemicals, in particular the acidic leaching reagent and the reducing agent, may be decreased. In particular, this series setup allows for the increment of the leaching yield of the metals of interest, i.e. Li and, if present, Ni, Co and/or Mn, from the lithium-containing feedstock, while controlling the leaching yields from the metal-based raw material feedstock by addition of a lower quantity of the reducing agent, thereby making it possible to avoid 100% leaching yield of impurities from leaching of the metal-based raw material feedstock.

In accordance with the second embodiment mentioned above, the present disclosure in a particularly preferred embodiment therefore provides for a process for generating a metal-containing aqueous solution, the process comprising:
- carrying out a first acid leaching on a lithium-containing feedstock to obtain a first leachate and using a first aqueous leaching solution that comprises an acidic leaching reagent and a reducing agent; and
- carrying out a second acid leaching on a metal-based raw material feedstock to obtain a second leachate and using a second aqueous leaching solution,
wherein the first leachate obtained from the first acid leaching is used as the second aqueous leaching solution for carrying out the second acid leaching, and the resulting second leachate forms the metal-containing aqueous solution.

The above-mentioned preferred leaching conditions also apply for this particularly preferred process.

In further preferred embodiments of the process of the present disclosure, the process may further comprise a step of filtering the first leachate obtained from the first acid leaching on the lithium-containing feedstock to separate an undissolved fraction from the first leachate. Filtering of the leachate obtained from leaching the lithium-containing feedstock may in particular be carried out in case the lithium-containing feedstock is a material derived from crushed lithium-ion batteries, i.e. black mass, since such material contains insoluble components (i.e. elements/metals which are not dissolved by the acidic leaching solution during leaching), mainly anode materials such as graphite, silicon or silicon-based materials.

The method and device for filtering and separating the undissolved fraction is not particularly limited, and any filtering method and device known to the skilled person may be applied as desired, for example by means of a filter press.

The separated undissolved fraction may be discarded or recycled and reused, for example in the production of anode material for batteries. However, the separated undissolved fraction obtained after the leaching step may still contain some traces of metals including metals of interest such as Li and cathode active metals Ni, Co and Mn, for example in amounts between 2 to 6 wt.%.

Therefore, in order to reduce the content of metals in the separated undissolved fraction to produce for example high purity graphite, silicon or silicon-based material with quality that allows them to be utilized in upcycling processes in the production of anode material with minimum pre-treatment stages, and to increase the overall leaching yield of metals of interest from the feedstock, i.e. Li and, if present, Ni, Co and/or Mn, a further acid leaching on the separated undissolved fraction (also referred to herein as the "third" acid leaching) may be carried out.

The same process conditions as mentioned above with respect to the first acid leaching and the second acid leaching may also be applied for carrying out the acid leaching on the separated undissolved fraction.

Therefore, in a still further preferred embodiment the process of the present disclosure further comprises carrying out acid leaching on the separated undissolved fraction to obtain a leachate, wherein a leaching solution for carrying out the acid leaching on the separated undissolved fraction comprises an acidic leaching reagent and a reducing agent.

The acidic leaching reagent in connection with the acid leaching on the separated undissolved fraction is independently selected, preferably from sulfuric acid, nitric acid, hydrochloric acid, citric acid, and any combination thereof, and more preferably is sulfuric acid, including the respective concentrated acids and diluted or aqueous acids. The concentration of acid may be varied in a wide range, for example 0.1 to 98% by weight, and preferably in a range between 10 and 98% by weight.

The reducing agent in connection with the acid leaching on the separated undissolved fraction is not particularly limited, but is independently selected preferably from hydrogen peroxide, hydrazine and its salts, methanol, ethanol, sugars, ascorbic acid, urea, starch, cellulose and any combination thereof, and more preferably is hydrogen peroxide.

Further preferably, the leaching solution for carrying out the acid leaching on the separated undissolved fraction comprises the acidic leaching reagent in an amount of equal to or more than 20 wt.%, preferably 20 wt.% to 30 wt.%, in excess of a stoichiometric.

It should be understood that in connection with the leaching of the undissolved fraction "excess over the stoichiometric" is related to the overall amount of metals of interest actually contained in the separated undissolved fraction employed for leaching, i.e. Li and preferably Ni, Co and/or Mn.

Further preferably, the leaching solution for carrying out the acid leaching on the separated undissolved fraction comprises the reducing reagent in an amount of 0.1 vol.% to 3 vol.%, more preferably 0.5 vol.% to 1.5 vol.%, based on a total volume of the leaching solution for leaching the separated undissolved fraction.

It has been found that such amounts of reducing agent for carrying out the acid leaching on the separated undissolved fraction advantageously allow for reducing the overall amount of acidic leaching agent needed, while optimal conditions based on maximizing leaching yield for the metals of interest, i.e. Li and, if present, Ni, Co and/or Mn, from the separated undissolved fraction can be ensured.

Further preferably, a total concentration of the metals of interest, i.e. Li and preferably active metals Ni, Co and/or Mn, in the leachate obtained from carrying out the acid leaching on the separated undissolved fraction is controlled to be in a range fully below the solubility limit of the respective metals, more preferably in the range of 80 g/L to 120 g/L, by addition of water during acid leaching of the separated undissolved fraction, to ensure to remain under the solubility limit of the respective metals in optimal leaching conditions based on leaching yields of >99%.

In accordance with a third embodiment explained above with reference to Fig. 3, the process of the present disclosure further comprises filtering the first leachate obtained from the first acid leaching on the lithium-containing feedstock to separate an undissolved fraction, for example graphite, silicon or silicon-based materials, and carrying out acid leaching on the separated undissolved fraction to obtain a leachate as described above.

After the leaching of the separated undissolved fraction, filtering may be carried out, and the solid residue may be washed with water to obtain the leachate.

According to the third embodiment of the process of the present disclosure, the leachate obtained from carrying out the acid leaching on the separated undissolved fraction, which consequently contains the metals leached from the separated undissolved fraction, is then used as the second leaching solution for carrying out the second acid leaching on the metal-based raw material feedstock. The leachate resulting from leaching the metal-based raw material feedstock with the leachate obtained from carrying out the acid leaching on the separated undissolved fraction, which consequently contains the metals leached from the separated undissolved fraction and from the metal-based raw material feedstock (i.e., the second leachate), and the first leachate obtained from the first acid leaching on the lithium-containing feedstock are finally mixed to form the metal-containing aqueous solution.

Preferably according to this embodiment of the process according to the present disclosure, the first leaching solution for carrying out the first acid leaching on the lithium-containing feedstock comprises the acidic leaching reagent, which is preferably selected from sulfuric acid, nitric acid, hydrochloric acid, citric acid, and any combination thereof, and more preferably is sulfuric acid, in an amount of 8 wt.% to 43 wt.%, more preferably 15 wt.% to 25 wt.%, in excess over the stoichiometric as defined above.

Hence, according to this preferred embodiment of the process according to the present disclosure the first leaching solution comprises the acidic leaching reagent in an amount of 8 wt.% to 43 wt.%, more preferably 15 wt.% to 25 wt.%, in excess over the stoichiometric amount (theoretically) needed to leach/dissolve substantially all (that means more than 99%) of the metals of interest, i.e. Li and preferably Ni, Co and/or Mn, from the lithium-containing feedstock, and the leaching solution for carrying out the acid leaching on the separated undissolved fraction comprises the acidic leaching reagent in an amount of equal to or more than 20 wt.%, preferably 20 wt.% to 30 wt.%, in excess over the stoichiometric amount (theoretically) needed to leach/dissolve substantially all (that means than 99%) of the metals of interest, i.e. Li and preferably active metals Ni, Co and/or Mn, from the separated undissolved fraction.

It has been found that within these excess amounts of acidic leaching reagent for carrying out the first acid leaching and the acid leaching on the separated undissolved fraction, optimal leaching conditions may be obtained in both cases to ensure an optimum balance between maximum leaching yield of metals of interest, i.e. Li and, if present, the NCM metals, from the lithium-containing feedstock and the separated undissolved fraction, and minimum consumption of leaching reagent.

Further preferably according to this embodiment of the process according to the present disclosure, the first leaching solution for carrying out the first acid leaching on the lithium-containing feedstock comprises a reducing agent in an amount of 3 vol.% to 7 vol.%, more preferably 4 vol.% to 6 vol.%, based on a total volume of the first leaching solution.

As mentioned above, the reducing agent for carrying out the first acid leaching and/or the acid leaching on the separated undissolved fraction is not particularly limited, but preferably is selected from hydrogen peroxide, hydrazine and its salts, methanol, ethanol, sugars, ascorbic acid, urea, starch, cellulose and any combination thereof, and more preferably is selected form hydrogen peroxide.

Accordingly, it is even more preferable according to this embodiment of the process of the present disclosure that the first leaching solution for carrying out the first acid leaching on the lithium-containing feedstock comprises an acidic leaching reagent, which is preferably sulfuric acid, in an amount of 8 wt.% to 43 wt.%, more preferably 15 wt.% to 25 wt.%, in excess over the stoichiometric and a reducing agent, which is preferably hydrogen peroxide, in an amount of 3 vol.% to 7 vol.%, more preferably 4 vol.% to 6 vol.%, based on a total volume of the first leaching solution, and that the leaching solution for carrying out the acid leaching on the separated undissolved fraction comprises an acidic leaching reagent, which is preferably sulfuric acid, in an amount of equal to or more than 20 wt.%, preferably 20 wt.% to 30 wt.%, in excess of the stoichiometric and a reducing agent, which is preferably hydrogen peroxide, in an amount of 0.1 vol.% to 3 vol.%, more preferably 0.5 vol.% to 1.5 vol.%, based on a total volume of the leaching solution used for leaching the separated undissolved fraction.

By applying these leaching conditions, leaching yields of the metals of interest, i.e. Li and, if present, Ni, Mn, and/or Co, from the lithium-containing feedstock of more than 99%, even more than 99.9% can be achieved, and at the same time the amount of metals contained in the separated undissolved fraction, including metals of interest like Li, Ni, Co and/or Mn, can be reduced to less than 1 wt.%, preferably less than 0.5 wt.%, and more preferably even less than 0.1 wt.%.

As mentioned above, according to the third embodiment of the process of the present disclosure the leachate obtained from carrying out the acid leaching on the separated undissolved fraction is used as a leaching solution for carrying out the second acid leaching on a metal-based raw material feedstock (i.e. the second leaching solution). Consequently, the second leaching solution in this embodiment contains the metals leached from the separated undissolved fraction, but also as an acidic leaching reagent the acidic leaching reagent used for carrying out the acid leaching on the separated undissolved fraction, preferably sulfuric acid, and optionally also the reducing agent and water if used.

It may however be further preferable according to this embodiment of the process of the present disclosure to add additional water, in particular such that a total concentration of the metals of interest in the second leachate obtained from carrying out the second acid leaching on the metal-based raw material feedstock using the leachate obtained from the leaching of the separated undissolved fraction as the second leaching solution is controlled to be in a range fully below the solubility limit of the respective metals, more preferably in the range of 80 g/L to 120 g/L by addition of water during the second acid leaching, in order to ensure to remain under the solubility limit of the respective metals even if optimal leaching conditions based on leaching yields of >99% are achieved.

According to the third embodiment of the process of the present disclosure, the first leachate obtained from the first acid leaching on the lithium-containing feedstock may have a pH value of 0.3 to 0.5 and the leachate obtained from the acid leaching on the separated undissolved fraction may have a pH value of 0 to 0.3. After the second acid leaching on the metal-based raw material feedstock using the leachate obtained from leaching the separated undissolved fraction as the second leaching solution, due to the consumption of free acid by the ions present in the metal-based raw material feedstock, e.g. hydroxide ions, the resulting second leachate may have a pH value of 1.0 to 1.4. The pH of the combined leachates, i.e. the metal-containing aqueous solution formed after mixing the first and second leachates, according to this embodiment may be in a range of 1.2 to 1.5.

Further preferably according to this embodiment of the process of the present disclosure the resulting combined leachate (i.e. the formed metal-containing aqueous solution) may have a density of 1.1 to 1.6, more preferably 1.2 to 1.4 g/mL.

This embodiment of the process according to the present disclosure, which applies acid leaching on a separated undissolved fraction and mixing leachates obtained from leaching the lithium-containing feedstock (i.e., the first leachate) and from leaching the metal-based raw material feedstock (i.e., the second leachate), therefore advantageously allows for increasing the pH of the resulting metal-containing aqueous solution without additional adding of a base or basic compound compared to a case of leaching the lithium-containing feedstock only (i.e., without the second acid leaching on the metal-based raw material feedstock). At the same time, the content of cathode active metals Ni, Co and/or Mn can be increased and the concentration of impurities such as Cu, Mg or Na can be decreased in the resulting aqueous solution due to the leaching of the metal-based raw material feedstock and the separated undissolved fraction.

Further advantageously, this embodiment of the process of the present disclosure allows for controlling the leaching yields from the metal-based raw material feedstock by addition of a lower quantity of the reducing agent and of the acidic leaching reagent, thereby making it possible to avoid 100% leaching yield of impurities from leaching of the metal-based raw material feedstock and to reduce the consumption of chemicals.

Furthermore, this embodiment of the process according to the present disclosure allows the reduction of the content of metals in the final separated undissolved fraction to produce e.g. graphite, silicon or silicon-based material with quality that allows them to be utilized in upcycling processes in the production of anode material with minimum pre-treatment stages.

In accordance with the third embodiment mentioned above, the present disclosure in a particularly preferred embodiment provides for a process for generating a metal-containing aqueous solution, the process comprising:
- carrying out a first acid leaching on a lithium-containing feedstock to obtain a first leachate and using a first aqueous leaching solution that comprises an acidic leaching reagent and a reducing agent;
- filtering the first leachate obtained from the first acid leaching to separate an undissolved fraction;
- carrying out acid leaching on the separated undissolved fraction to obtain a leachate and using an aqueous leaching solution that comprises an acidic leaching reagent and a reducing agent;
- carrying out a second acid leaching on a metal-based raw material feedstock to obtain a second leachate and using a second aqueous leaching solution; and
- mixing the first leachate obtained from the first acid leaching and the second leachate obtained from the second acid leaching to form the metal-containing aqueous solution,
wherein the leachate obtained from carrying out the acid leaching on the separated undissolved fraction is used as the second aqueous leaching solution for carrying out the second acid leaching.

The above-mentioned preferred leaching conditions also apply for this particularly preferred process.

In accordance with a fourth embodiment explained above with reference to Fig. 4, the process of the present disclosure further comprises filtering the first leachate obtained from the first acid leaching on the lithium-containing feedstock to separate an undissolved fraction, for example graphite, silicon or a silicon-based material, and carrying out acid leaching on the separated undissolved fraction to obtain a leachate as described above.

After the leaching of the separated undissolved fraction, filtering may be carried out, and the solid residue may be washed with water to obtain the leachate.

According to the fourth embodiment of the process of the present disclosure, the process further comprises a step of mixing the first leachate obtained from carrying out the first acid leaching on the lithium-containing feedstock and the leachate obtained from carrying out the acid leaching on the separated undissolved fraction to thereby obtain a mixed leachate, which consequently contains the metals leached from the lithium-containing feedstock and from the separated undissolved fraction. The thus obtained mixed leachate is then used as the second leaching solution for carrying out the second acid leaching on the metal-based raw material feedstock. According to this embodiment, the leachate resulting from leaching the metal-based raw material feedstock with the mixed leachate (i.e., the second leachate), which consequently contains the metals leached from the lithium-containing feedstock, from the separated undissolved fraction and from the metal-based raw material feedstock (i.e. from all three leaching operations), forms the metal-containing aqueous solution.

Preferably according to this embodiment of the process according to the present disclosure, the first leaching solution for carrying out the first acid leaching on the lithium-containing feedstock comprises the acidic leaching reagent, which is preferably selected from sulfuric acid, nitric acid, hydrochloric acid, citric acid, and any combination thereof, and more preferably is sulfuric acid, in an amount of 8 wt.% to 43 wt.%, more preferably 15 wt.% to 25 wt.%, in excess over the stoichiometric as defined above.

Further preferably according to this embodiment of the process according to the present disclosure, the first leaching solution for carrying out the first acid leaching on the lithium-containing feedstock comprises a reducing agent in an amount of 3 vol.% to 7 vol.%, more preferably 4 vol.% to 6 vol.%, based on a total volume of the first leaching solution. As mentioned above, the reducing agent for carrying out the first acid leaching and/or the acid leaching on the separated undissolved fraction is not particularly limited, but preferably is selected from hydrogen peroxide, hydrazine and its salts, methanol, ethanol, sugars, ascorbic acid, urea, starch, cellulose and any combination thereof, and more preferably is selected form hydrogen peroxide.

Therefore, it is even more preferable according to this embodiment of the process of the present disclosure that the first leaching solution for carrying out the first acid leaching on the lithium-containing feedstock comprises the acidic leaching reagent, which is preferably sulfuric acid, in an amount of 8 wt.% to 43 wt.%, more preferably 15 wt.% to 25 wt.%, in excess over the stoichiometric as defined above and a reducing agent, which is preferably hydrogen peroxide, in an amount of 3 vol.% to 7 vol.%, more preferably 4 vol.% to 6 vol.%, based on a total volume of the first leaching solution, and that the leaching solution for carrying out the acid leaching on the separated undissolved fraction comprises an acidic leaching reagent, which is preferably sulfuric acid, in an amount of equal to or more than 20 wt.%, preferably 20 wt.% to 30 wt.%, in excess of the stoichiometric as defined above and a reducing agent, which is preferably hydrogen peroxide, in an amount of 0.1 vol.% to 3 vol.%, more preferably 0.5 vol.% to 1.5 vol.%, based on a total volume of the leaching solution used for leaching the separated undissolved fraction.

By applying these leaching conditions, leaching yields of the metals of interest, i.e. Li and, if present, Ni, Co and/or Mn, from the lithium-containing feedstock of more than 99%, even more than 99.9% can be achieved, and at the same time the amount of metals contained in the separated undissolved fraction, including metals of interest like Li, Ni, Co and/or Mn, can be reduced to less than 1 wt.%, preferably less than 0.5 wt.%, and more preferably even less than 0.1 wt.%.

As mentioned above, according to the fourth embodiment of the process of the present disclosure the mixed leachate is used as the second leaching solution for carrying out the second acid leaching on the metal-based raw material feedstock, which consequently contains the metals leached from the lithium-containing feedstock and from the separated undissolved fraction, but also as an acidic leaching reagent the acidic leaching reagent respectively used for carrying out the acid leaching on the lithium-containing feedstock (i.e. the first acid leaching) and on the separated undissolved fraction, preferably sulfuric acid, and optionally also the reducing agents and water if used.

It may however be further preferable according to this embodiment of the process of the present disclosure to add additionally water, in particular such that a total concentration of the metals of interest in the second leachate obtained from carrying out the second acid leaching on the metal-based raw material feedstock using the mixed leachate as the second leaching solution is controlled to be in a range fully below the solubility limit of the respective metals, more preferably in the range of 80 g/L to 120 g/L, by addition of water during the second acid leaching, in order to ensure to remain under the solubility limit of the respective metals even if optimal leaching conditions based on leaching yields of >99% are achieved.

According to the fourth embodiment of the process of the present disclosure, the first leachate obtained from the first acid leaching on the lithium-containing feedstock may have a pH value of 0.3 to 0.5 and the leachate obtained from the acid leaching on the separated undissolved fraction may have a pH value of 0 to 0.3. After mixing of the first leachate obtained from the first acid leaching and the leachate obtained from carrying out the acid leaching on the separated undissolved fraction, the resulting mixed leachate may have a pH value of 0.2 to 0.5. After the second acid leaching on the metal-based raw material feedstock using the mixed leachate as the second leaching solution, due to the consumption of free acid by the ions present in the metal-based raw material feedstock, e.g. hydroxide ions, the resulting second leachate which forms the metal-containing aqueous solution according to this embodiment may have a pH value of 1.2 to 1.5.

Further preferably according to this embodiment of the process of the present disclosure the resulting second leachate which forms the metal-containing aqueous solution may have a density of 1.1 to 1.6, more preferably 1.2 to 1.4 g/mL.

This embodiment of the process according to the present disclosure, which applies acid leaching on a separated undissolved fraction and using a mixed leachate as a leaching solution for carrying out acid leaching on the metal-based raw material feedstock, therefore advantageously allows for increasing the pH of the resulting metal-containing aqueous solution without additional adding of a base or basic compound compared to a case of leaching the lithium-containing feedstock only (i.e., without the second acid leaching on the metal-based raw material feedstock). At the same time, the content of cathode active metals Ni, Co and/or Mn can be increased and the concentration of impurities such as Cu, Mg or Na can be decreased in the resulting aqueous solution due to the leaching of the metal-based raw material feedstock and the separated undissolved fraction.

Further advantageously, this embodiment of the process of the present disclosure allows for controlling the leaching yields from the metal-based raw material feedstock by addition of a lower quantity of the reducing agent and of the acidic leaching reagent, thereby making it possible to avoid 100% leaching yield of impurities from leaching of the metal-based raw material feedstock and to reduce the consumption of chemicals.

Furthermore, this embodiment of the process according to the present disclosure allows the reduction of the content of metals in the final separated undissolved fraction to produce e.g. high purity graphite, silicon or silicon-based materials with quality that allows their utilization in upcycling processes in the production of anode material with minimum pre-treatment stages.

In accordance with the fourth embodiment mentioned above, the present disclosure in a particularly preferred embodiment provides for a process for generating a metal-containing aqueous solution, the process comprising:
- carrying out a first acid leaching on a lithium-containing feedstock to obtain a first leachate and using a first aqueous leaching solution that comprises an acidic leaching reagent and a reducing agent;
- filtering the first leachate obtained from the first acid leaching to separate an undissolved fraction;
- carrying out acid leaching on the separated undissolved fraction to obtain a leachate and using an aqueous leaching solution that comprises an acidic leaching reagent and a reducing agent;
- mixing the first leachate obtained from the first acid leaching and the leachate obtained from carrying out the acid leaching on the separated undissolved fraction to obtain a mixed leachate; and
- carrying out a second acid leaching on a metal-based raw material feedstock to obtain a second leachate and using a second aqueous leaching solution,
wherein the mixed leachate is used as the second aqueous leaching solution for carrying out the second acid leaching, and the resulting second leachate forms the metal-containing aqueous solution.

The above-mentioned preferred leaching conditions also apply for this particularly preferred process.

In particularly preferred embodiments of the present disclosure, the acidic leaching reagent used in the respective leaching solutions for carrying out the first, the second and the optional third acid leaching as defined herein is sulfuric acid, and the metal-containing aqueous solution formed is a metal sulfate-containing aqueous solution comprising at least lithium sulfate, and further preferably one or more of nickel sulfate, cobalt sulfate and manganese sulfate.

Without further elaboration, it is believed that a person skilled in the art can, using the present description including the accompanying drawings, utilize the present invention to its fullest extent. Although the invention has been described herein with regard to its preferred embodiments, which represent the best mode for carrying out the invention, it is understood that various changes as would be obvious to one of ordinary skill in this art can be made without departing from the spirit and scope of the disclosure, which is set forth in the appended claims.

## Claims

1. Process for generating a metal-containing aqueous solution, the process comprising:
- carrying out a first acid leaching on a lithium-containing feedstock to obtain a first leachate and using a first leaching solution; and
- carrying out a second acid leaching on a metal-based raw material feedstock to obtain a second leachate and using a second leaching solution,
to form the metal-containing aqueous solution.

2. Process according to claim 1, wherein the lithium-containing feedstock comprises one or more of Ni, Co and Mn, and/or wherein the metal-based raw material feedstock comprises one or more of Ni, Co and Mn.

3. Process according to claim 1 or 2, wherein the first leaching solution for carrying out the first acid leaching and the second leaching solution for carrying out the second acid leaching independently from one another comprise an acidic leaching reagent, which is preferably selected from sulfuric acid, nitric acid, hydrochloric acid, citric acid, and any combination thereof.

4. Process according to any one of claims 1 to 3, wherein the first leaching solution for carrying out the first acid leaching and/or the second leaching solution for carrying out the second acid leaching comprises a reducing agent, which is preferably selected from hydrogen peroxide, hydrazine and its salts, methanol, ethanol, sugars, ascorbic acid, urea, starch, cellulose, and any combination thereof.

5. Process according to any one of claims 1 to 4, wherein a total concentration of metals of interest in the first leachate is controlled to be in a range fully below the solubility limit of the respective metals, preferably in the range of 80 g/L to 120 g/L, by addition of water during the first acid leaching, and/or wherein a total concentration of metals of interest in the second leachate is controlled to be in a range fully below the solubility limit of the respective metals, preferably in the range of 80 g/L to 120 g/L, by addition of water during the second acid leaching.

6. Process according to any one of claims 1 to 5, wherein the process further comprises mixing the first leachate obtained from the first acid leaching and the second leachate obtained from the second acid leaching to form the metal-containing aqueous solution.

7. Process according to any one of claims 1 to 6, wherein the first leaching solution comprises an acidic leaching reagent in an amount of 8 wt.% to 43 wt.%, preferably 15 wt.% to 25 wt.%, in excess over a stoichiometric, and/or wherein the second leaching reagent comprises an acidic leaching reagent in an amount of 0 wt.% to 10 wt.%, preferably 0 wt.% to 5 wt.%, in excess over a stoichiometric.

8. Process according to any one of claims 1 to 7, wherein the first leaching solution comprises a reducing agent in an amount of 3 vol.% to 7 vol.%, preferably 4 vol.% to 6 vol.%, based on a total volume of the first leaching solution, and/or wherein the second leaching solution comprises a reducing agent in an amount of 0.1 vol.% to 3 vol.%, preferably 0.5 vol.% to 1.5 vol.%, based on a total volume of the second leaching solution.

9. Process according to any one of claims 1 to 5, wherein the first leachate obtained from the first acid leaching is used as the second leaching solution for carrying out the second acid leaching, and the resulting second leachate forms the metal-containing aqueous solution.

10. Process according to claim 9, wherein the first leaching solution comprises an acidic leaching reagent in an amount of equal to or more than 20 wt.%, preferably 20 wt.% to 60 wt.%, more preferably 50 wt.% to 60 wt.%, in excess over a stoichiometric.

11. Process according to claim 9 or 10, wherein the first leaching solution comprises a reducing agent in an amount of 3 vol.% to 5 vol.% based on a total volume of the first leaching solution, and/or wherein the second leaching solution comprises a reducing agent in an amount of 0.4 vol.% to 0.8 vol.% based on a total volume of the second leaching solution.

12. Process according to any one of claims 1 to 11, further comprising filtering the first leachate obtained from the first acid leaching to separate an undissolved fraction.

13. Process according to claim 12, further comprising carrying out acid leaching on the separated undissolved fraction to obtain a leachate, wherein a leaching solution for carrying out the acid leaching on the separated undissolved fraction comprises an acidic leaching reagent and a reducing agent.

14. Process according to claim 13, wherein the leaching solution for carrying out the acid leaching on the separated undissolved fraction comprises the acidic leaching reagent in an amount of equal to or more than 20 wt.%, preferably 20 wt.% to 30 wt.%, in excess of a stoichiometric.

15. Process according to claim 13 or 14, wherein the leaching solution for carrying out the acid leaching on the separated undissolved fraction comprises the reducing reagent in an amount of 0.1 vol.% to 3 vol.%, preferably 0.5 vol.% to 1.5 vol.%, based on a total volume of the leaching solution for leaching the separated undissolved fraction.

16. Process according to any one of claims 13 to 15, wherein a total concentration of metals of interest in the leachate obtained from carrying out the acid leaching on the separated undissolved fraction is controlled to be in a range fully below the solubility limit of the respective metals, preferably in the range of 80 g/L to 120 g/L, by addition of water during acid leaching of the separated undissolved fraction.

17. Process according to any one of claims 13 to 16, wherein
the leachate obtained from carrying out the acid leaching on the separated undissolved fraction is used as the second leaching solution for carrying out the second acid leaching; and
wherein the process further comprises mixing the resulting second leachate obtained from the second acid leaching and the first leachate obtained from the first acid leaching to form the metal-containing aqueous solution.

18. Process according to any one of claims 13 to 16, wherein the process further comprises:
mixing the first leachate obtained from the first acid leaching and the leachate obtained from carrying out the acid leaching on the separated undissolved fraction to obtain a mixed leachate, and
wherein the mixed leachate is used as the second leaching solution for carrying out the second acid leaching, and the resulting second leachate forms the metal-containing aqueous solution.

19. Process according to claim 17 or 18, wherein the first leaching solution comprises an acidic leaching reagent in an amount of 15 wt.% to 25 wt.% in excess of a stoichiometric; and/or wherein the first leaching solution comprises a reducing agent in an amount of 4 vol.% to 6 vol.% based on a total volume of the first leaching solution.

20. Process according to any one of claims 1 to 19, wherein the lithium-containing feedstock is selected from recycled materials feedstocks, preferably material derived from crushed lithium-ion batteries or lithium-ion battery manufacturing scrap, or a combination thereof, and/or wherein the metal-based raw material feedstock is selected from metal-containing concentrates, mixed hydroxide precipitates (MHP), mixed sulfide precipitates (MSP), mattes, nickel laterite, or ferronickel, or any combination thereof.

21. Process according to any one of claims 1 to 20 wherein the metal in the metal-containing aqueous solution comprises Li and one or more of Ni, Co and Mn, preferably Li and two or more of Ni, Co and Mn, more preferably Li, Ni, Co and Mn.

22. Process according to any one of claims 12 to 21, wherein the undissolved fraction is one or more of graphite, silicon and silicon-based material.
